# EUROPEAN PATENT SPECIFICATION

(11) **EP 2 718 053 B1**
(45) Date of publication and mention of the grant of the patent: **23.10.2019**
(21) Application number: 12727723.4
(22) Date of filing: 05.06.2012
(51) Int. Cl.: B23K 9/12

(54) **SELF-ADJUSTING LINER ASSEMBLY FOR WELDING TORCH**
SELBSTANPASSENDE DRAHTFÜHRUNG FÜR EINEN SCHWEISSBRENNER
GAINE DE GUIDAGE AUTO-ADAPTABLE POUR TORCHE DE SOUDAGE

(30) Priority: 06.06.2011 US 201113153486
(43) Date of publication of application: 16.04.2014
(73) Proprietor: Illinois Tool Works Inc., Glenview, IL 60025 (US)
(72) Inventor: WELLS, Jeffrey G., Glenview, Illinois 60026 (US); PRATT, Kenneth K., Glenview, Illinois 60026 (US)
(74) Representative: Trinks, Ole
(86) International application number: PCT/US2012/040883
(87) International publication number: WO 2012/170403

(56) References cited:
- EP-A1- 2 070 629
- WO-A1-2005/021199
- US-A1- 2008 217 314

## Description

This invention relates to liners for welding torches, and more particularly to a self-adjusting liner assembly for a welding torch.

A self-adjusting liner assembly according to the preamble of claim 1 is known from US 2008/217 314 A1.

### BACKGROUND OF THE INVENTION

It is known in the art that a conventional welding torch includes a liner retainer installed into a distal end of the welding torch. A liner insert is inserted into a proximal end of the welding torch and secured to the liner retainer. Once the liner insert is secured to the liner retainer, the liner insert is cut to a predetermined size (e.g., about 0.1 centimeters to about 10 centimeters past the end of the welding torch) and electrode wire can be fed through an aperture in the liner retainer.

In such torches the liner may become unseated from the retainer due, for example, to expansion of the welding torch. Unseating of the liner may cause improper feeding of the electrode
wire into a contact tip of the welding torch. This may also cause increased wear of the contact tip, leading to premature replacement of the contact tip.

### SUMMARY OF THE INVENTION

The present invention provides a self-adjusting liner assembly that maintains proper liner position in a welding torch. The liner assembly utilizes a spring loaded mechanism that constantly pushes the liner forward into a retaining head, into which a contact tip is threaded. This ensures proper feeding of electrode wire into the contact tip and reduces contact tip wear where the wire enters the tip. The liner assembly also allows for passage of welding gas through the assembly.

More particularly, a self-adjusting liner assembly for a welding torch in accordance with the invention includes an elongated tubular body having a forward end, a rearward end, and a central bore extending from the forward end to the rearward end. An elongated fixed tube is mounted in the bore. The assembly further includes an elongated tubular slide having an inner end, an outer end, and a shoulder proximate the outer end. The fixed tube is received in the inner end of the slide, and the slide cooperates with the fixed tube in a telescoping relationship in the bore. A resilient member is disposed in the bore and envelopes a portion of the fixed tube and the slide. The resilient member engages the shoulder of the slide and urges the slide
away from the fixed tube and toward the forward end of the body. The central bore of the elongated tubular body includes a stop in said forward end for limiting the movement of the slide and a seat in sear rearward end. Said self-adjusting liner assembly further comprises an inlet guide (38) being removably disposed in said rearward end of said elongated tubular body engaging the seat and including a recess, which is defined by an increased diameter portion of a passage through the inlet guide, receiving the elongated fixed tube, and an opposite end of the resilient member engaging the inlet guide.

The resilient member may be a spring or similar. The shoulder of the slide is urged toward the forward end of the body. The slide may include a retainer at the outer end for receiving a front loading liner. The front loading liner may include a liner insert and a liner body connected to the liner insert. The liner insert is receivable in the retainer of the slide. The slide may include at least one longitudinally extending gas passage. The gas passage may be defined as one of a longitudinally extending recess disposed on the periphery of the shoulder and a longitudinally extending aperture through the shoulder.

A welding torch in accordance with the invention includes a self-adjusting liner assembly as defined above, a power pin, and a rear handle. Said forward end of said power pin is removeably mounted in said rear handle. The welding torch also includes a front handle and a gooseneck having first and second ends. The forward end of the power pin is removably mounted in the rear handle. The first end of the gooseneck is operatively connected to the front handle. A contact tip assembly is mounted on the second end of the gooseneck.

In a specific embodiment of the welding torch, the welding torch may include a front loading liner that is inserted from the second end of the gooseneck to the power pin mounted in the rear handle. The slide may include a retainer at the outer end for receiving the front loading liner. The front loading liner may include a liner insert and a liner body connected to the liner insert. The liner insert is receivable in the retainer of the slide. The slide may also include at least one longitudinally extending gas passage therethrough.

These and other features and advantages of the invention will be more fully understood from the following detailed description of the invention taken together with the accompanying drawings.

### BRIEF DESCRIPTION OF THE DRAWINGS

In the drawings:
FIG. 1 is an environmental perspective view of a welding torch including a self-adjusting liner assembly mounted on a robotic arm;
FIG. 2 is a perspective view of a power pin including the self-adjusting liner assembly and an associated welding torch body;
FIG. 3 is a cross-sectional view of the power pin including the self-adjusting liner assembly and the welding torch body taken along the line 3-3 in FIG. 2;
FIG. 4 is an exploded perspective view of a portion of the welding torch including the self-adjusting liner assembly;
FIG. 5 is an exploded perspective view of the power pin and self-adjusting liner assembly; and
FIG. 6 is a perspective view of the self-adjusting liner assembly and an associated front load liner.

### DETAILED DESCRIPTION OF THE INVENTION

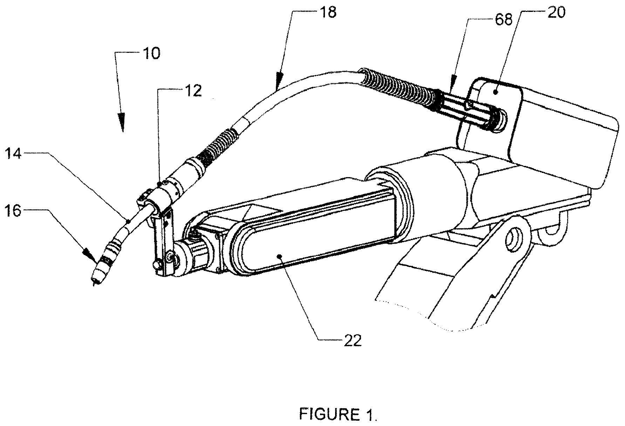

Referring now to the FIG. 1 in detail, numeral 10 generally indicates a welding torch such as a gas metal arc welding (GMAW) torch, a metal inert gas (MIG) torch, or similar welding torch. The welding torch 10 broadly includes a main housing 12, a gooseneck 14, and a contact tip assembly 16. A cable 18 is connected to a rearward end of the main housing 12 to supply gas, electrical current, and a consumable electrode (e.g., a metal welding wire) to the torch 10. The cable 18 may be connected via a rear handle 68 to a wire feeder 20 opposite the main housing 12. The gooseneck 14 is operatively connected to a forward end of the main housing 12 and allows for the communication of the consumable electrode, the shielding gas, and the welding current to the contact tip assembly 16 mounted on the gooseneck. The welding torch 10 also may be mounted to a robotic arm 22.

The wire feeder 20 feeds the welding wire through the welding torch 10, and ultimately through an orifice in the contact tip assembly 16 at the forward end of the welding torch. The welding wire, when energized for welding, carries a high electrical potential. When the welding wire makes contact with target metal workpieces, an electrical circuit is completed and current flows through the welding wire, across the metal workpieces and to ground. The current causes the welding wire and the parent metal of the workpieces in contact with the welding wire to melt, thereby joining the workpieces as the melt solidifies.

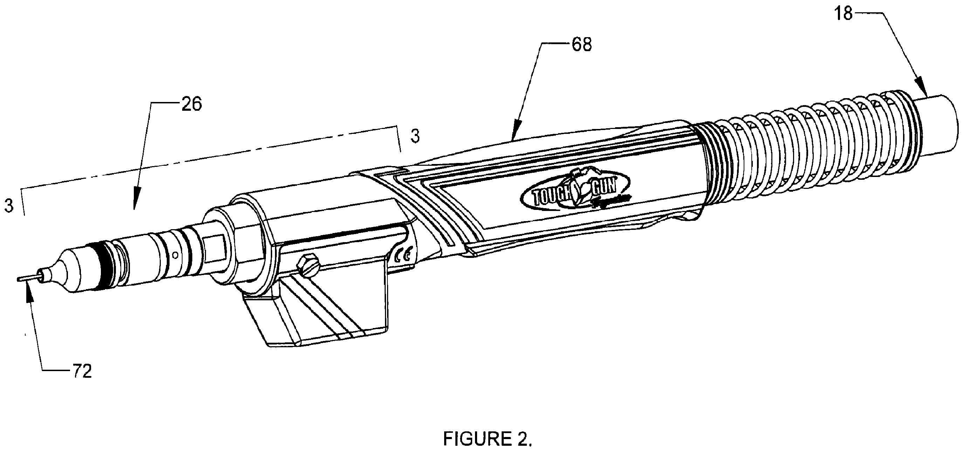

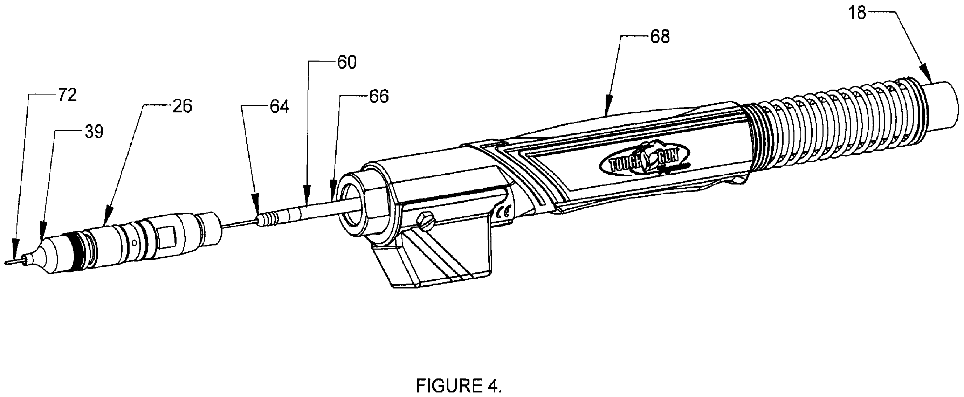

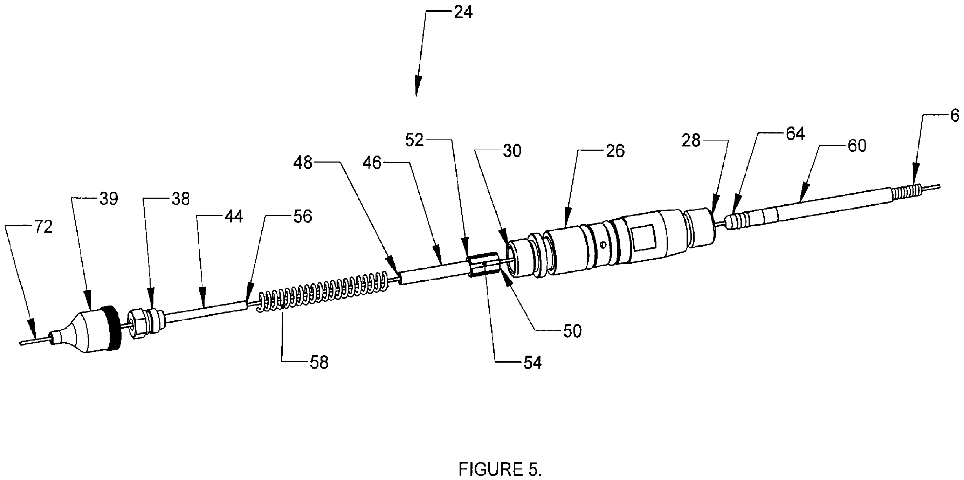

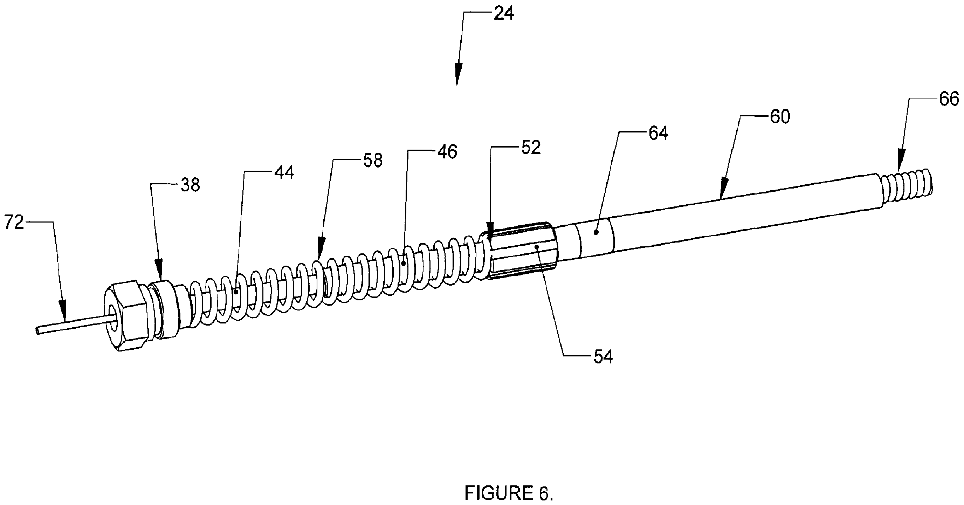

With reference to FIGS. 2 through 6, the welding torch 10 includes a self-adjusting liner assembly 24 in accordance with the invention. The self-adjusting liner assembly 24 includes an elongated tubular body 26 which may be defined at least in part by a power pin or may be a tubular member that is separate from and connected to the power pin. In the embodiment shown in the drawings, the tubular body is entirely defined by the power pin. The tubular body 26 has a forward end 28, a rearward end 30, and a central bore or through hole 32 extending from the forward end to the rearward end. The bore 32 includes a stop 34 in the forward end 28 for limiting the movement of a slide and a seat 36 in the rearward end 30 for seating an inlet guide.

An inlet guide 38 is disposed in the rearward end 30 of the body 26 and removably mounted therein the bore 32 adjacent the seat 36 such that the inlet guide engages the seat. A cap 39 may be attached to the rearward end 30 of the body 26 and may cover over the inlet guide 38. The inlet guide 38 includes a recess 40 which is defined by an increased diameter portion of a passage 42 through the inlet guide. An elongated fixed tube 44 is received in the recess 40 of the inlet guide 38 and thereby mounted in the bore 32 of the body 26 such that the fixed tube extends inwardly into the bore.

The liner assembly 24 further includes an elongated tubular slide 46 having an inner end 48, an outer end 50, a shoulder 52 proximate the outer end, and at least one longitudinally extending gas passage 54 defined by one of a longitudinally extending recess disposed on the periphery of the shoulder and a longitudinally extending aperture through the shoulder. In a specific embodiment, the slide 46 includes a plurality of gas passages 54. The gas passage(s) 54 allow for the passage of shielding gas through the slide 46. The slide shoulder 52 is generally disposed toward the forward end 28 of the body 26. The slide 46 cooperates with the fixed tube 44 in a telescoping relationship in the bore 32 of the body 26. In other words, an end 56 of the fixed tube 44 opposite the inlet guide 38 is received in the inner end 48 of the slide 46, and the slide 46 is slidable about the fixed tube 44, varying the distance between the shoulder 52 and the inlet guide 38.

A resilient member 58 such as a spring, coil spring, or other resilient, compressible member is disposed in the bore 32 of the body 26. The resilient member 58 envelops a portion of the fixed tube 44 and the slide 46 between the slide shoulder 52 and inlet guide 38. One end of the resilient member 58 engages the slide shoulder 52 and an opposite end of the resilient member engages the inlet guide 38. The resilient member 58 urges the slide 46 away from the fixed tube 44, causing the slide to be urged toward the forward end 28 of the body 26. When the slide 46 is fully extended, it engages and is limited in motion by the stop 34.

The welding torch may also include a quick-load front loading liner 60. The front loading liner 60 provides a channel for the welding wire from the liner assembly 24 through the gooseneck 14 into the contact tip assembly 16. The slide 46 may include a retainer 62 in the shoulder 52 generally adjacent the forward end 28 of the body 26 at the outer end 50 of the slide. An end of the front loading liner 60 may be inserted into the bore 32 of the body 26 at the body forward end 28 and is receivable in the retainer 62. In a specific embodiment, the front loading liner 60 may include liner insert 64 defining the end of the liner and a flexible liner body 66 connected to or integral with the liner insert. The liner body 66 may be a metal (e.g., aluminum) coil. In this embodiment, the liner insert 64 is inserted into the retainer 62 and releasably secured therein.

Referring now to FIGS. 1 through 6, the self-adjusting liner assembly 24 is positioned at the rearward end of the welding torch 10. The forward end of the power pin including the liner assembly 24 is connected to the rear handle 68, and the rear handle 68 is operatively connected to the gooseneck 14 via the cable 18. Thus, the rear handle 68 is intermediate the body 26 of the liner assembly 24 and the gooseneck 14. The contact tip assembly 16 is connected to the forward end of the gooseneck 14 opposite the liner assembly 24 and rear handle 68. The front loading liner 60 is installed from the front of the welding torch 10. To install the liner 60, the contact tip assembly 16 (which may include a retaining head and contact tip) may be removed from the welding torch 10. The liner 60 is then inserted from the front of the welding torch 10 and fed into the welding torch. As the liner 60 is fed into the torch, the liner enters the bore 32 of the body 26 from the gooseneck 14 and rear handle 68, and is received in the piston recess 68, causing the liner 60 to become engaged with the retainer 62 in the slide 46. The liner 60 is further urged into the torch to compress the resilient member 58 via slide 46, and then the liner is cut approximately 5/8 of an inch from the forward end of the gooseneck 14. The contact tip assembly 16 may then be reinstalled on the welding torch 10 at the forward end of the gooseneck 14.

At this time, the slide 46 generally fully compresses the resilient member 58, and the counterforce of the resilient member 58 urges the slide forward. The force the resilient member exerts on the slide maintains engagement of the slide with the liner insert 64 of the front loading liner 60 and engagement of the liner body 66 in the contact tip assembly 16.

Welding wire 72 is fed through the welding torch 10 (for example, by wire feeder 20) from the rear of the torch to the forward end of the torch. As it is fed, the welding wire 72 passes through the guide cap 39 (if present) into the power pin, through the passage 42 in the inlet guide 38 into the fixed tube 44, through the fixed tube into the tubular slide 46, through the tubular slide into the front loading liner 60, and all the way through the front loading liner into the contact tip assembly 16. As the welding wire 72 passes through the liner assembly 24, the fixed tube 44 and tubular slide 46 support the welding wire and aid in preventing the wire from wandering or binding inside the liner assembly.

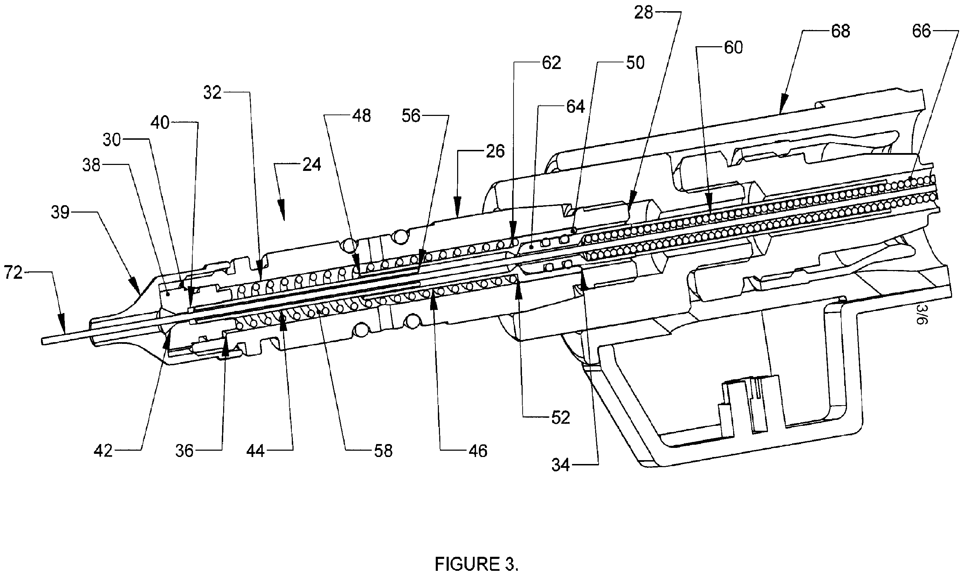

It is critical that the liner 60 is seated properly directly behind the contact tip of the contact tip assembly 16 at the front end of the torch 10 to reduce wear of the contact tip and to maintain proper feeding of the welding wire 72 into the contact tip. Advantageously, the self-adjusting liner assembly 24 constantly urges the liner 60 forward (via slide 46) into a mating seat in the contact tip assembly 16, ensuring that liner is properly positioned in the contact tip and that the welding wire 72 is properly fed into the contact tip. For example, as the welding torch 10 is operated, it expands over time due to the thermal expansion of the materials of torch body caused by the heat of the welding process. Also, if the liner 60 is made of plastic, gas and heat may cause the liner, especially the front portion in the contact tip assembly 16, to be consumed over time. Otherwise, if the liner 60 is made of metal or similar, the liner is not likely to be consumed. As the torch 10 expands and/or the liner 60 is consumed, the slide 46 advances forward in the bore 32 of the body 26, thereby continually urging the liner 60 forward such that the front end of the liner 60 is properly seated in the contact tip assembly 16. In one embodiment, the slide 46 may be able to travel about one inch in the bore 32 before contacting the stop 34. When the slide shoulder 52 becomes engaged with the stop 34, the slide 46 is in its fully extended position (e.g., see FIG. 3) and cannot move any farther forward. At this time, it may be necessary to replace the front loading liner 60 and recompress the resilient member 58.

Although the invention has been described by reference to specific embodiments, it should be understood that numerous changes may be made within the scope of the inventive concepts described. Accordingly, it is intended that the invention not be limited to the described embodiments, but that it have the full scope defined by the language of the following claims.

## Claims

1. A self-adjusting liner assembly (24) for a welding torch (10) comprising:
an elongated tubular body (26) having a forward end (28), a rearward end (30), and a central bore (32) extending from said forward end (28) to said rearward end (30);
an elongated fixed tube (44) mounted in said bore (32);
an elongated tubular slide (46) having an inner end (48), an outer end (50), and a shoulder (52) proximate said outer end (50);
said fixed tube (44) being received in said inner end of said slide (46), and said slide (46) cooperating with said fixed tube (44) in a telescoping relationship in said bore (32); and
a resilient member (58) disposed in said bore (32) and enveloping a portion of said fixed tube (44) and said slide (46), said resilient member (58) engaging said shoulder (52) of said slide (46) and urging said slide (46) away from said fixed tube (44) and toward the forward end (28) of said body (26),
said central bore (32) of the elongated tubular body (26) including a stop (34) in said forward end (28) for limiting the movement of the slide and a seat (36) in said rearward end (30),
**characterized in that**
said self-adjusting liner assembly (24) further comprises an inlet guide (38) being removably disposed in said rearward end (30) of said elongated tubular body (26) engaging the seat (36) and including a recess (40), which is defined by an increased diameter portion of a passage (42) through the inlet guide, receiving the elongated fixed tube (44), and an opposite end of the resilient member (58) engaging the inlet guide (38).

2. The self-adjusting liner assembly of claim 1, wherein said resilient member (58) is a spring.

3. The self-adjusting liner assembly of claim 1, wherein said shoulder (52) of said slide (46) is urged toward said forward end (28) of said body (26).

4. The self-adjusting liner assembly of claim 1, including a front loading liner (60) and wherein said slide (46) includes a retainer (62) at said outer end for receiving said front loading liner (60).

5. The self-adjusting liner assembly of claim 4, wherein said front loading liner (60) includes a liner insert (64) and a liner body (66) connected to said liner insert (64), said liner insert (64) being receivable in said retainer(62) of said slide (46).

6. The self-adjusting liner assembly of claim 1, wherein said slide (46) includes at least one longitudinally extending gas passage (54), said gas passage (54) being defined as one of a longitudinally extending recess disposed on the periphery of said shoulder (52) and a longitudinally extending aperture through said shoulder.

7. A welding torch (10) comprising:
a self-adjusting liner assembly (24) according to claim 1;
a rear handle (68), said forward end of said power pin being removably mounted in said rear handle (68);
a front handle;
a gooseneck (14) having first and second ends, said first end being operatively connected to said front handle; and
a contact tip assembly (16) mounted on said second end of said gooseneck (14).

8. The welding torch of claim 7, including a front loading liner (60) that is inserted from said second end of said gooseneck (14) to said power pin mounted in said rear handle (68).

9. The welding torch of claim 8, wherein said slide (46) includes a retainer (62) at said outer end for receiving said front loading liner (60).

10. The welding torch of claim 9, wherein said front loading liner (60) includes a liner insert (64) and a liner body (66) connected to said liner insert (64), said liner insert (64) being receivable in said retainer (62) of said slide (46).

11. The welding torch of claim 7, wherein said slide (46) includes at least one longitudinally extending gas (54) passage therethrough.

## Patentansprüche

1. Selbstanpassende Drahtführung (24) für einen Schweißbrenner (10), umfassend:
einen länglichen, röhrenförmigen Körper (26) mit einem vorderen Ende (28), einem hinteren Ende (30) und einer mittleren Bohrung (32), die sich von dem vorderen Ende (28) zu dem hinteren Ende (30) erstreckt;
ein längliches, festes Rohr (44), das in der Bohrung (32) montiert ist;
einen länglichen, röhrenförmigen Schlitten (46) mit einem inneren Ende (48), einem äußeren Ende (50) und einer Schulter (52) in der Nähe des äußeren Endes (50);
wobei das feste Rohr (44) in dem inneren Ende des Schlittens (46) aufgenommen ist und der Schlitten (46) mit dem festen Rohr (44) in einer teleskopierenden Beziehung in der Bohrung (32) zusammenwirkt; und
ein elastisches Element (58), das in der Bohrung (32) angeordnet ist und einen Abschnitt des festen Rohres (44) und des Schlittens(46) umhüllt, wobei das elastische Element (58) in die Schulter (52) des Schlittens (46) eingreift und den Schlitten (46) von dem festen Rohr (44) weg und in Richtung des vorderen Endes (28) des Körpers (26) drängt,
wobei die zentrale Bohrung (32) des länglichen röhrenförmigen Körpers (26) einen Anschlag (34) in dem vorderen Ende (28) beinhaltet, um die Bewegung des Schlittens und eines Sitzes (36) in dem hinteren Ende (30) zu begrenzen,
**dadurch gekennzeichnet, dass**
die selbstanpassende Drahtführung (24) ferner eine Einlassführung (38) beinhaltet, die in dem hinteren Ende (30) des länglichen röhrenförmigen Körpers (26) angeordnet ist, eingreifend in den Sitz (36) und beinhaltend eine Vertiefung (40), die definiert ist durch einen Abschnitt einer Passage (42) durch die Einlassführung, dessen Durchmesser vergrößert ist, aufnehmend ein längliches befestigtes Rohr (44), und ein gegenüberliegendes Ende des elastischen Elements (58), das in die Einlassführung (38) eingreift.

2. Selbstanpassende Drahtführung nach Anspruch 1, wobei das elastische Element (58) eine Feder ist.

3. Selbstanpassende Drahtführung nach Anspruch 1, wobei die Schulter (52) des Schlittens (46) gegen das vordere Ende (28) des Körpers (26) gedrängt wird.

4. Selbstanpassende Drahtführung nach Anspruch 1, beinhaltend einen vordere Ladedrahtführung (60), und wobei der Schlitten (46) einen Halter (62) an dem äußeren Ende zum Aufnehmen der vorderen Ladedrahtführung (60) beinhaltet.

5. Selbstanpassende Drahtführung nach Anspruch 4, wobei die vordere Ladedrahtführung (60) einen Drahtführungseinsatz (64) und einen Drahtführungskörper (66) beinhaltet, der mit dem Drahtführungseinsatz (64) verbunden ist, wobei der Drahtführungseinsatz (64) in dem Halter (62) des Schlittens (46) aufnehmbar ist.

6. Selbstanpassende Drahtführung nach Anspruch 1, wobei der Schlitten (46) mindestens eine sich längs erstreckende Gaspassage (54) beinhaltet, wobei die Gaspassage (54) als eine von einer sich längs erstreckenden Vertiefung definiert ist, die auf der Peripherie der Schulter (52) und einer sich längs erstreckenden Öffnung durch die Schulter definiert ist.

7. Schweißbrenner (10), umfassend:
eine selbstanpassende Drahtführung (24) nach Anspruch 1;
einen hinteren Griff (68), wobei das vordere Ende des Energiestifts entfernbar in dem hinteren Griff (68) montiert ist;
einen vorderen Griff,
einen Schwanenhals (14) mit einem ersten und zweiten Ende, wobei das erste Ende operativ mit dem vorderen Griff verbunden ist; und
eine Kontaktspitzenanordnung (16), montiert an dem zweiten Ende des Schwanenhalses (14).

8. Schweißbrenner nach Anspruch 7, beinhaltend eine vordere Ladedrahtführung (60), die von dem zweiten Ende des Flaschenhalses (14) zu dem in dem hinteren Griff (68) montierten Energiestift eingesetzt ist.

9. Schweißbrenner nach Anspruch 8, wobei der Schlitten (46) einen Halter (62) an dem äußeren Ende zum Aufnehmen der vorderen Ladedrahtführung (60) beinhaltet.

10. Schweißbrenner nach Anspruch 9, wobei die vordere Ladedrahtführung (60) einen Drahtführungseinsatz (64) und einen Drahtführungskörper (66) beinhaltet, der mit dem Drahtführungseinsatz (64) verbunden ist, wobei der Drahtführungseinsatz (64) in dem Halter (62) des Schlittens (46) aufnehmbar ist.

11. Schweißbrenner nach Anspruch 7, wobei der Schlitten (46) mindestens eine sich dorthindurch längs erstreckende Gaspassage (54) beinhaltet.

## Revendications

1. Ensemble chemise à réglage automatique (24) pour une tête de soudage (10) comprenant :
un corps tubulaire allongé (26) ayant une extrémité avant (28), une extrémité arrière (30), et un alésage central (32) s'étendant de ladite extrémité avant (28) à ladite extrémité arrière (30) ;
un tube fixe allongé (44) monté dans ledit alésage (32) ;
une glissière tubulaire allongée (46) ayant une extrémité interne (48), une extrémité externe (50), et un épaulement (52) au voisinage de ladite extrémité externe (50) ;
ledit tube fixe (44) étant reçu dans ladite extrémité interne de ladite glissière (46), et ladite glissière (46) coopérant avec ledit tube fixe (44) dans une relation télescopique dans ledit alésage (32) ; et
un élément élastique (58) disposé dans ledit alésage (32) et enveloppant une partie dudit tube fixe (44) et de ladite glissière (46), ledit élément élastique (58) venant en prise avec ledit épaulement (52) de ladite glissière (46) et poussant ladite glissière (46) à l'écart dudit tube fixe (44) et vers l'extrémité avant (28) dudit corps (26),
ledit alésage central (32) du corps tubulaire allongé (26) comprenant une butée (34) dans ladite extrémité avant (28) pour limiter le mouvement de la glissière et un siège (36) dans ladite extrémité arrière (30),
**caractérisé en ce que**
ledit ensemble chemise à réglage automatique (24) comprend en outre un guide d'entrée (38) disposé de manière amovible dans ladite extrémité arrière (30) dudit corps tubulaire allongé (26) venant en prise avec le siège (36) et comprenant un évidement (40), qui est défini par une partie à diamètre accru d'un passage (42) traversant le guide d'entrée, recevant le tube fixe allongé (44), et une extrémité opposée de l'élément élastique (58) venant en prise avec le guide d'entrée (38).

2. Ensemble chemise à réglage automatique selon la revendication 1, dans lequel l'élément élastique (58) est un ressort.

3. Ensemble chemise à réglage automatique selon la revendication 1, dans lequel ledit épaulement (52) de ladite glissière (46) est poussé vers ladite extrémité avant (28) dudit corps (26).

4. Ensemble chemise à réglage automatique selon la revendication 1, comprenant une chemise de chargement avant (60) et dans lequel ladite glissière (46) comprend un dispositif de retenue (62) au niveau de ladite extrémité externe pour recevoir ladite chemise de chargement avant (60).

5. Ensemble chemise à réglage automatique selon la revendication 4, dans lequel ladite chemise de chargement avant (60) comprend un insert de chemise (64) et un corps de chemise (66) relié audit insert de chemise (64), ledit insert de chemise (64) pouvant être reçu dans ledit dispositif de retenue (62) de ladite glissière (46).

6. Ensemble chemise à réglage automatique selon la revendication 1, dans lequel ladite glissière (46) comprend au moins un passage de gaz s'étendant longitudinalement (54), ledit passage de gaz (54) étant défini comme un évidement s'étendant longitudinalement disposé sur la périphérie dudit épaulement (52) ou une ouverture s'étendant longitudinalement à travers ledit épaulement.

7. Tête de soudage (10) comprenant :
un ensemble chemise à réglage automatique (24) selon la revendication 1,
une poignée arrière (68), ladite extrémité avant de ladite broche d'alimentation étant montée de manière amovible dans ladite poignée arrière (68) ;
une poignée avant ;
un col de cygne (14) ayant des première et seconde extrémités, ladite première extrémité étant reliée de manière opérationnelle à ladite poignée avant ; et
un ensemble à pointe de contact (16) monté sur ladite seconde extrémité dudit col de cygne (14).

8. Tête de soudage selon la revendication 7, comprenant une chemise de chargement avant (60) qui est insérée à partir de ladite seconde extrémité dudit col de cygne (14) jusqu'à ladite broche d'alimentation montée dans ladite poignée arrière (68).

9. Tête de soudage selon la revendication 8, dans laquelle ladite glissière (46) comprend un dispositif de retenue (62) au niveau de ladite extrémité externe pour recevoir ladite chemise de chargement avant (60).

10. Tête de soudage selon la revendication 9, dans laquelle ladite chemise de chargement avant (60) comprend un insert de chemise (64) et un corps de chemise (66) relié audit insert de chemise (64), ledit insert de chemise (64) pouvant être reçu dans ledit dispositif de retenue (62) de ladite glissière (46).

11. Tête de soudage selon la revendication 7, dans laquelle ladite glissière (46) comprend au moins un passage de gaz s'étendant longitudinalement (54) à travers celle-ci.
